Europäisches Patentamt

European Patent Office

Office européen des brevets

(19)

(11) Veröffentlichungsnummer: **0 000 223**
**B1**

(12) **EUROPÄISCHE PATENTSCHRIFT**

(45) Veröffentlichungstag der Patentschrift: **02.03.83**

(51) Int. Cl.³: **B 29 D 3/02, C 08 L 67/06**

(21) Anmeldenummer: **78200045.9**

(22) Anmeldetag: **19.06.78**

(54) Herstellung von Formteilen aus einem ungesättigten Polyesterharz, mineralischen Füllstoffen und Glasfasern und die nach diesem Verfahren erhaltenen Formteile.

(30) Priorität: **24.06.77 NL 7706997**

(43) Veröffentlichungstag der Anmeldung:
**10.01.79 Patentblatt 79/1**

(45) Bekanntmachung des Hinweises auf die Patenterteilung:
**02.03.83 Patentblatt 83/9**

(84) Benannte Vertragsstaaten:
**BE DE FR GB LU SE**

(56) Entgegenhaltungen:
**DE - A - 2 243 991**
**DE - A - 2 252 566**
**DE - A - 2 410 787**
**DE - A - 2 509 236**
**FR - A - 1 466 894**
**US - A - 3 631 217**
**US - A - 3 986 992**

(73) Patentinhaber: **STAMICARBON B.V.**
**Postbus 10**
**NL-6160 MC Geleen (NL)**

(72) Erfinder: **Van Gasse, René Leopold Eduard**
**Lietenstraat 19**
**B-3660 Opglabbeek (BE)**

(74) Vertreter: **Van Leeuwen H.B. et al,**
**Octrooibureau DSM Postbus 9**
**NL-6160 MA Geleen (NL)**

## Herstellung von Formteilen aus einem ungesättigten Polyesterharz, mineralischen Füllstoffen und Glasfasern und die nach diesem Verfahren erhaltenen Formteile

Die Erfindung betrifft ein Verfahren zur Herstellung von Formteilen durch Vermischung von ungesättigem Polyesterharz, anorganischen Füllstoffen und Magnesiumoxid, Eindickung dieses Gemisches in Gegenwart von Glasfasern und Verpressung von Teilen der eingedickten Masse bei erhöhter Temperatur.

Häufig benutzte Pressmassen, welche ungesättigtes Polyesterharz, mineralische Füllstoffe und Glasfasern enthalten, sind im Handel bereits seit langer Zeit als 'dough moulding compound' (DMC) bekannt. Diese Massen enthalten relativ grosse Harzmengen und ziemlich lange, gebündelte Glasfasern. Für die Herstellung dünnwändiger, willkürlich geformter und/oder stark gebogener Formteile sind derartige Massen weniger gut geeignet. Die Glasfasern oriëntieren sich während des Pressvorgangs in bestimmten Richtungen, wodurch die Polymerisationsschwindung nicht gleichmässig abgefangen wird, so dass die Verteilung der Festigkeit und Elastizität nicht homogen ist. Weiterhin wirken die an der Oberfläche des Formteils liegenden Glasfaserbündel wie Kapillaren, was sich ungünstig auf die Qualität des Produktes in feuchter Umgebung auswirkt. Weil in der Masse viel Luft eingeschlossen wird, lässt sich diese schwer zu dünnwändigen beliebig geformten Teilen verarbeiten. Schliesslich macht der hohe Harzgehalt die Formteile relativ teuer.

Eine andere Pressmasse ist unter der Bezeichnung 'sheet moulding compound' (SMC) bekannt. Diese enthält neben den vorgenannten Bestandteilen auch Magnesiumoxid. Dieses Gemisch lässt man in Gegenwart einer Glasfaserschicht zwischen Polyäthylenfolie eindicken. Anschliessend füllt man eine Form mit der Masse oder mit Teilen derselben zusammen mit der Glasfaserschicht und wird das Ganze bei erhöhter Temperatur verpresst. Die Verarbeitung von Massen dieser Art ist ziemlich arbeitsintensiv. Der erforderliche hohe Glasfasergehalt und das Harz machen die Formteile ebenfalls relativ teuer.

Eine dritte Masse, die als 'bulk moulding compound' (BMC) bezeichnet wird, hat die gleiche Zusammensetzung wie SMC, wird jedoch in einem Kneter hergestellt und hat wegen der darin enthaltenen grossen Glasfasermenge dieselben Nachteile wie DMC.

Aufgabe der vorliegenden Erfindung ist nunmehr die Herstellung von Formteilen aus einem Gemisch der eingangs erwähnten Zusammensetzung, das sich besser verarbeiten lässt, billiger ist und einen gleich guten oder sogar besseren E-Modul hat als die vergenannten Gemische.

Nach der vorliegenden Erfindung wird dies erreicht, wenn das Gemisch neben dem ungesättigten Polyesterharz, bezogen auf das gesamte Gemisch, 80 bis 95 Gew.-% anorganische Füllstoffe mit einer hauptsächlich zwischen 0 und 500 Mikron liegenden Korngrösse, 1 bis 5 Gew.-% Glasfasern, bezogen auf das gesamte Gemisch, von denen zumindest 3/4 eine Länge von weniger als 15 mm haben und hauptsächlich als willkürlich verteilte Einfäden vorhanden sind, und 0,5 bis 5 Gew.-% Magnesiumoxid, bezogen auf das ungesättigte Polyesterharz, enthält, welches Gemisch eingedickt wird, bis es kompakt und nahezu luftfrei ist.

Die Erfindung beruht auf der Erkenntnis, dass es möglich ist, eine Pressmasse mit seht hohem Füllstoffgehalt herzustellen, die sich sehr gut zu dünnwändigen Formteilen beliebiger Form und guter Qualität verpressen lässt. Voraussetzung dabei ist, dass die Glasfasern in gut spezifizierter Form und Menge vorhanden sind. Der geringe Gehalt an Harz und Glasfasern macht den Selbstkostenpreis der herzustellenden Formteile niedriger als bei Anwendung der bekannten Gemische. Eine weitere Voraussetzung für das erfundungsgemässe Verfahren ist, dass die Masse kompakt und nahezu luftfrei ist, bevor sie verpresst wird.

Die Anwesenheit von Glasfasern ist erforderlich, um die Polymerisationsschwindung abzufangen. Um diese Schwindung gut verteilen zu können, müssen die Glasfasern willkürlich verteilt als Einfäden in der Pressmasse vorhanden sein. Um die Willkürliche Verteilung der Fasern beim Verpressen zu behalten, ist es weiterhin erforderlich, dass diese relativ kurz sind. Es hat sich auch herausgestellt, dass das Gemisch sich vor dem Eindicken schwer verarbeiten lässt, wenn der Glasfasergehalt höher ist, als oben angegeben wurde. Trotz der geringen Glasfasermenge haben die Formteile einen ausreichend hohen E-Modul. Sehr gute Resultate gibt ein Glasfasergehalt von nicht mehr als 1 bis 2,5 Gew.-%. Weil die Fasern in Form von Einfäden aufgenommen werden, wirken sie nich kapillar, so dass keine Einwirkung von Feuchtigkeit auftritt.

Eine geëignete Länge der Glasfasern ist vorwiegend 6 bis 12 mm, wobei die mittlere Länge vorzugsweise ca. 9 mm beträgt. Die Fasern können der Vorrichtung, in der die Masse gemischt wird, auf Wunsch gebundelt zugeführt werden, wobei so lange gerührt werden muss, dass sich die Glasfasern schliesslich willkürlich verteilt als Einfäden im Gemisch befinden. Die willkürlich orientierten Glasfasern tragen weiterhin dafür Sorge, dass die Polymerisationsschwindung auch an stark gebogenen Stellen gut verteilt wird und der E-Modul des Formteils in allen Richtungen gleich ist.

Als Füllstoff ist jeder anorganische, vorzugsweise mineralische, Füllstoff geeignet, wie Calciummagnesiumcarbonat (Domomit), Calciumcarbonat, Quarzmehl, Talk, verschiedene Tonsorten u. dgl. Eine gut verpressbare Masse für nicht allzu dickwändige Formteile mit einer Wandstärke von z.B. 5 bis 10 mm wird erhalten, wenn die Korngrösse des Füllstoffes hauptsächlich zwischen 0 und 500 Mikron und vorzugsweise nicht mehr als 200 Mikron beträgt.

Das ungesättigte Polyesterharz kann jedes geëignete Reaktionsprodukt von mehrwertigen Alkoholen und mehrwertigen undgesättigten Säuren oder säurebildenden Anhydriden sein. Von den Alkoholen können Propylenglycol, Äthylenglycol, Pentandiol, Butandiol, Butylenglycol und Dipropylenglycol genannt werden. Von den Säuren sind Maleinsäureanhydrid, Phthalsäureanhydrid, Isophthalsäureanhydriet, Adipinsäure u. dgl. gebräuchlich.

Das ungesättigte Polyesterharz wird normalerweise vernetzt. Zu diesem Zweck sind ungesättigte Verbindungen wie Styrol, Methylmetacrylat, Vinylacetat und Diallylphthalat geëignet. Als Katalysator bei dieser Vernetzung kann man die üblichen Peroxide wie Benzoylperoxid oder tertiäres Butylperbenzoat verwenden. Ein produkt wie hydriertes Bisphenol A plus Katalysator, im Handel als 'Synolite 373' bekannt, ist egenfalls zu diesem Zweck brauchlich.

Das obenbeschriebene, aus Harz, Füllstoffen und Glasfasern bestehende Gemisch ist dickflüssig. Nach einer Ausführungsform der vorliegenden Erfindung giesst man das Gemisch in einen Behälter o. dgl. und lässt man esin 1 bis 48 Stunden zu einer kompakten, nahezu luftfreien Pressmasse eindicken. Mit einer kompakten Pressmasse wird hier eine dichte, Fensterkitt ähnliche Masse angedeutet die derart viskös ist dass sie eine gegebene Form nahezu nich verliert und durch schneiden in Teilen unterteilt werden kann. Dieses Eindicken beruht auf der Wirkung des ebenfalls eingemischten Magnesiumoxids. Von der eingedickten Masse kann man jeweils die benötigte Menge abschneiden und in die Pressform oder Matrize geben, wonach das Ganze unter erhöter Temperatur zum erwüschten Formteil gepresst wird. Von entscheidender Bedeutung dabei ist, dass im Gegensatz zu den bekannten Pressmassen eine luftfreie, kompakte Pressmasse erhalten wird.

Temperatur und Druck sind beim Verpressen der Masse nicht kritisch und werden u.a. durch die Wandstärke des erwünschten Formteils in Relation zu der optimalen Presszeit und dem Katalysator bedingt. Übliche Temperaturen sind 100 bis 250°C übliche Drücke liegen zwischen 3 und 20 MPa. Die Presszeit wird normalerweise zwischen $\frac{1}{2}$ und 30 Minuten liegen und vorzugsweise ca. $1\frac{1}{2}$ bis 6 Minuten betragen.

Mit Hilfe des obenbeschriebenen Verfahrens hergestellte Formteile können bei oder kurz nach dem Verpressen mit einer harten und/oder dekorativen Oberflächenschicht versehen werden. Man kann das noch heisse und noch nicht vollständig ausgebärtete Formteil zum Beispiel kurz nach dem Verpressen mit einem pulverförmigen Harz behandeln. Zu diesem Zweck sind Epoxyharze, die freie Hydroxylgruppen enthalten, wie Methylol- oder Phenolgruppen, oder ungesättigte Polyesterharze sowie Gemische eines Epoxy- und eines Polyesterharzes geëignet. Auch können die noch freien Hydroxylgruppen des noch nicht vollständig ausgehärteten Formteils auf diese Weise eine dreidimensionale Vernetzung bewirken, wodurch eine gute Haftung zwischen Oberflächenschicht und Formteil erreicht wird.

Vorzugsweise wendet man diese Behandlungsmethode an, wenn das Formteil noch eine Temperatur von minimal 150°C und vorzugsweise von 175—200°C hat. Ein Vorteil dabei ist, dass das erfindungsgemässe Formteil dank seinem hohen Gehalt an anorganischen Füllstoffen einen grossen Wärmeinhalt hat.

Die Behandlung mit pulverförmigen Harz kann aus Spritzen, elektrostatische Zerstäubung und Tauchen in ein Fliessbett des Pulvers bestehn. Dabei werden im allgemeinen 50 bis 300 g Pulver je m² angebracht. Das modifizierte Epoxyharz braucht nicht monochromatisch zu sein, er sind auch systematische oder willkürliche Farbschattierungen möglich

Eine andere Methode zum Anbringen einer harten Oberflächenschicht besteht darin, dass eine oder mehrere vorimprägnierte Glasvliesze angebracht werden. Dazu legt man in die Pressform oder Matrize eine oder mehrere mit einem Epoxy- oder Polyester- oder einem Gemisch dieser beiden Harze imprägnierte Glasvliesze, bevor man die Pressmasse in die Pressform oder Matrize giesst, Falls eine transparente oder teilweise transparente Schicht erwünscht ist, entspricht der Brechungsindex des Harzes nach der Aushärtung vorzugsweise ungefähr dem Brechungsindex des Glasvlieszes.

Auf schöne Weise kann eine Dekoration dadurch angebracht werden, dass diese zwischen zwei Glasvlieszen angebracht wird. Es lässt sich für diese Dekoration eine ganze Reihe von Möglichkeiten erdenken. Man kann z.B. zwischen den Glasvlieszen feinverteilte anorganische oder organische Stoffe anbringen. Beispiele sind Metallpulver, farbige Mineralien, Polymerisatteilen usw. Auch kann eine der beiden Glasvlieszen vorher mit einem Motiv bedruckt werden, vorzugsweise mit Hilfe eines gefärbten oder pigmentierten Harzes. Such sind Kombinationen beider Methoden möglich.

Daneben können die Formteile auch auf die in der niederländischen Patentanmeldung 7305807 beschriebene Weise mit einer Dekoration versehen werden.

Schliesslich kann die Oberfläche strukturiert werden, indem man eine Pressform mit strukturierten Wänden benutzt.

Bei Benutzung einer oder mehrerer Glasvliesze als harte Oberflächenschicht wird man vorzugsweise auch auf der anderen Seite des Formteils ein Glasvliesz anbringen.

Die Erfindung wird anhand eines praktischen Beispiels näher erläutert. Als ungesättigtes Polyesterharz wird ein Polykondensationsprodukt von:

1,5 Mol hydriertem Bisphenol A,
1,5 Mol Propylenglycol,
0,5 Mol Phthalsäureanhydrid,
1 Mol Maleinsäureanhydrid und
1 Mol Fumarsäureanhydrid

verwendet.

650 Teile dieses Harzes werden gemischt mit:

235 Gew.-Tlen. Styrolmonomerem,
100 Gew.-Tlen. Diallylphthalat,
10 Gew.-Tlen. tertiärem Butylperbenzoat und
5 Gew.-Tlen. Wasser.

Diesem Harzgemisch wird 1 Gew.-% Magnesiumoxid beigegeben.

Ausgehend von diesem Harsgemisch wird eine Gemisch hergestellt, das, bezogen auf die gesamte Masse, 85 Gew.-% Calcium-Magnesiumcarbonat mit einer Teilchengrösse von 0—200 Mikron und 1,5 Gew.-% Glasfasern mit einer hauptsächlich zwischen 6 und 9 mm liegenden Länge enthält. Das zähflüssige Gemisch wirk in einen Behälter gegossen. Nach 24 Stunden ist das Gemisch zu einer nahezu luftfreien, kompakten und schneidbaren Pressmasse eingedickt. Ein von dieser Masse abgeschnittener Teil wird anschliessend in einer Matrize 1'30" bei einer Temperatur von 200°C und einem Druck von 150 kg/cm² (15 MPa) zu einer Platte mit einer Stärke von ca. 8 mm verpresst. Der E-Modul dieses Materials beträgt ca. 150.000 kg/cm² (15 GN/m²) gegenüber 115.000 kg/cm² (11,5 GN/m²) bzw. 110.000 kg/cm² (11 GN/m²) für die im Handel erhältlichen auf dieselbe Weise verpressten BMC- bzw. SMC-Massen.

Wenn die Oberflächentemperatur der gepressten Platte noch 190°C beträgt, wird ein aus festem pigmentiertem Epoxy- und Polyesterharz bestehendes Gemisch in äusserst feinem Zustand durch Zerstäubung auf der Oberfläche angebracht. Je m² werden ca. 200 g dieses Gemisches angebracht. Nach Abkühlung ist das Resultat eine Platte, deren Oberfläche sich kaum von der Oberfläche eines mit keramischer Glasur überzogenen gusseisernen Duschbeckens unterscheiden lässt. Die Platte genügt den Normen des Commercial Standard (USA) Nr. CS 222-59 für Duschbecken. Bei 140-stündiger Behandlung unter kochendem Wasser ändert sich die schöne Oberfläche nicht.

Eine gleiche Platte mit unbehandelter Oberfläche wird lange Zeit den Witterungsverhältnissen eines Seeklimas ausgesetzt. Die Oberfläche zeigt keine sichtbaren Veränderungen.

Der gleiche Pressversuch wird mit 0,5 bzw. 6 Gew.-% Glasfasern ausgeführt. Im ersten Fall ist die Platte sehr spröde; im zweiten Fall lässt sich das Gemisch nicht ausgiessen und nicht in eine luftfreie, kompakte Pressmasse umsetzen.

Eine Pressmasse wie oben beschrieben mit den gleichen Gewichtsverhältnissen der Bestandteile, aber mit langen Glasfasern zeigt sich weniger gut zum Verpressen zu stark gebogenen, dünnwändigen Formteilen geëignet als eine Pressmasse mit kurzen, willkürlich orientierten Glasfasern. In diesem Fall stellt sich heraus, dass die Festigkeit an gebogenen Stellen weniger gut ist als bei Anwendung von kurzen Fasern. Das Bruchrisiko an stark gebogenen stellen ist zu gross, um aus dieser Masse Gebrauchsgegenstände herzustellen.

Bei Versuchen konnte der Füllstoffgehalt auf 95 Gew.-% gesteigert werden. Bei höheren Gehalten geht der Zusammenhang völlig verloren.

Untenstehende Tabelle gibt eine übersicht über die Zusammensetzung, die Kosten und den E-Modul eines im Handel erhältlichen 'bulkmoulding compound' (BMC), eines 'sheet moulding compound' (SMC) und eines erfindungsgemässen Gemisches.

TABELLE

| Gew.-% | BMC | SMC | erfindungsgemäss |
|---|---|---|---|
| Harz | 25 | 25 | 13,5 |
| Füllstoffe | 69 | 55 | 85 |
| Glasfasern | 16 | 20 | 1,5 |
| Kosten je Volumeneinheit | 1,66 A | 2,70 A | A |
| E-Modul | 115.000 kg/cm² | 110.000 kg/cm² | 150.000 kg/cm² |

Es stellt sich heraus, dass es ohne weiteres möglich ist, während des Pressvorgangs als Dekoration zwei vorimpregnierte Glasvliesze anzubringen, zwischen denen vorher Bronzepulver zerstäubt wurde. Diese Dekoration ist gut reproduzierbar, wenn jeweils die gleiche Menge Pulver auf die gleiche Weise angebracht wird.

Die Erfindung betrifft schliesslich auch Formteile, deren Körper, bezogen auf das gesamte Körpergewicht, zu 80 bis 95 Gew.-% aus anorganischen Füllstoffen mit einer hauptsächlich zwischen 0 und 500 Mikron liegenden Korngrösse, zu maximal 5 Gew.-%, bezogen auf das gesamte Körpergewicht, aus Glasfasern, von denen zumindest 3/4 eine Länge von weniger als 15 mm haben und hauptsächlich als Einfäden in willkürlicher Verteilung vorhanden sind, sowie aus gehärtetem Polyesterharz, das Magnesiumoxid enthält, besteht.

Die vorliegende Erfindung beschränkt sich nicht nur auf verhältnismässig komplizierte Formteile, sondern unfasst auch relativ einfache Formteile wie Fliessen oder Wandplatten.

## Patentansprüche

1. Verfahren zur Herstellung von Formteilen durch Vermischung von ungesättigtem Polyesterharz, anorganischen Füllstoffen und Magnesiumoxid, Eindickung dieses Gemisches in Gegenwart von Glasfasern und Verpressung von Teilen der eingedickten Masse bei erhöhter Temperatur, dadurch gekennzeichnet, dass das Gemisch neben dem ungesättigten Polyesterharz, bezogen auf das gesamte Gewicht, 80 bis 95 Gew.-% anorganische Füllstoffe mit einer hauptsächlich zwischen 0 und 500 Mikron liegenden Korngrösse, 1 bis 5 Gew.-% Glasfasern, bezogen auf das gesamte Gemisch, von denen zumindest 3/4 eine Länge von weniger als 15 mm haben und hauptsächlich als willkürlich verteilte Einfäden vorhanden sind, und 0,5 bis 5 Gew.-% Magnesiumoxid, bezogen auf das ungesättigte Polyesterharz, enthält, welches Gemisch eingedickt wird, bis es kompakt und nahezu luftfrei ist.

2. Verfahren nach Anspruch 1, dadurch gekennzeichnet, dass 1 bis 2,5 Gew.-% Glasfasern vorhanden sind.

3. Verfahren nach den Ansprüchen 1—2, dadurch gekennzeichnet, dass die Glasfasern vorwiegend eine Länge von 6 bis 12 mm haben.

4. Verfahren nach den Ansprüchen 1—3, dadurch gekennzeichnet, dass die mittlere Länge der Glasfasern ungefähr 9 mm beträgt.

5. Verfahren nach den Ansprüchen 1—4, dadurch gekennzeichnet, dass der Füllstoff hauptsächlich eine Korngrösse bis 200 Mikron hat.

6. Verfahren nach den Ansprüchen 1—5, dadurch gekennzeichnet, dass das Gemisch 1 bis 48 Stunden lang zu einer kompakten, nahezu luftfreien Pressmasse eingedickt wird.

7. Verfahren nach den Ansprüchen 1—6, dadurch gekennzeichnet, dass die eingedickte Mass bei einer Temperatur zwischen 100 und 250°C und einem Druck zwichen 30 (3) und 200 (20) kg/cm² (MPa) verpresst wird.

8. Verfahren nach den Ansprüchen 1—7, dadurch gekennzeichnet, dass das Formteil in noch nicht ganz ausgehärtetem Zustand bei einer Temperatur von mindestens 150°C mit einem pulverförmigen Harz behandelt wird.

9. Verfahren nach Anspruch 8, dadurch gekennzeichnet, dass das Harz ein Epoxyharz mit freien Hydroxylgruppen, ein ungesättigtes Polyesterharz oder ein Gemisch eines Epoxy- und eines Polyesterharzes ist.

10. Verfahren nach Anspruch 8 oder 9, dadurch gekennzeichnet, dass die Temperatur während der Behandlung 175 bis 200°C beträgt.

11. Verfahren nach den Ansprüchen 1—7, dadurch gekennzeichnet, dass vor dem Einbringen der Pressmasse in die Pressform eine oder mehrere Glasvliesze angebracht werden, die mit einem Epoxy- oder Polyesterharz oder einem Gemisch dieser Harze imprägniert sind.

12. Verfahren nach Anspruch 11, dadurch gekennzeichnet, dass zwei Glasvliesze angebracht werden, zwischen denen sich eine Dekoration befindet.

13. Verfahren nach Anspruch 12, dadurch gekennzeichnet, dass die Dekoration aus feinverteilten anorganischen oder organischen Stoffen besteht.

14. Verfahren nach Anspruch 12, dadurch gekennzeichnet, dass die Dekoration aus einem pigmentierten Harz besteht.

15. Formteil, bestehend aus einem Körper auf Basis von Polyesterharz und gegebenfalls einer Oberflächenschicht, dessen Körper besteht aus ein em gehärteten Gemisch aus, bezogen auf das gesamte Gemisch, 80 bis 95 Gew.-% anorganischen Füllstoffen mit einer hauptsächlich zwischen 0 und 500 Mikron liegenden Korngrösse, 1 bis 5 Gew.-% Glasfasern, bezogen auf das gesamte Gemisch, von denen zumindest 3/4 eine Länge von weniger als 15 mm haben und hauptsächlich als willkürlich verteilte Einfäden vorhanden sind, und 0,5 bis 5 Gew.-% Magnesiumoxid, bezogen auf des ungesättigte Polyesterharz.

## Revendications

1. Procédé de fabrication de pièces moulées en mélangeant une résine de polyester non saturée, des charges inorganiques et de l'oxyde de magnésium, en épaississant ce mélange en présence de fibres de verre et en moulant des parties de la masse épaissie à une température élevée, caractérisé en ce que le mélange contient, outre la résine de polyester non saturée, 80 à 95% en poids de charges inorganiques, calculé par rapport au mélange entier, lesquelles charges ont une grosseur de grain située essentiellement entre 0 et 500 microns, 1 à 5% en poids de fibres de verre, calculé par rapport au mélange entier, dont au moins les 3/4 ont une longueur de moins de 15 mm et s'y trouvent essentiellement comme monofilaments arbitrairement divisés, ainsi que 0,5 à 5% en poids d'oxyde de magnésium, calculé par rapport à la résine de polyester non saturée, lequel mélange est épaissi jusqu'à ce qu'il soit compact et à peu près exempt d'air.

2. Procédé selon la revendication 1, caractérisé en ce que 1 à 2,5% en poids de fibres de verre sont présents.

3. Procédé selon l'une des revendications 1 et 2, caractérisé en ce que les fibres de verre ont en majeure partie une longueur de 6 à 12 mm.

4. Procédé selon l'une des revendications 1 à 3, caractérisé en ce que la longueur moyenne des fibres de verre est de 9 mm environ.

5. Procédé selon l'une des revendications 1 à 4, caractérisé en ce que la charge a essentiellement une grosseur de grain jusqu'à 200 microns.

6. Procédé selon l'une des revendications 1 à 5, caractérisé en ce que le mélange est épaissi, pendant 1 à 48 heures, jusqu'a ce qu'il forme une masse compacte à peu près exempte d'air.

7. Procédé selon l'une des revendications 1 à 6, caractérisé en ce que la masse épaissie est moulée à une température située entre 100 et 250 Ø°C et à une pression située entre 30 (3) et 200 (20) kg/cm² (MPa).

8. Procédé selon l'une des revendications 1 à 7, caractérisé en ce que l'objet moulé est traité, à l'état pas encore complètement durci, à une température d'au moins 150°C à l'aide d'une résine en poudre.

9. Procédé selon la revendication 8, caractérisé en ce que la resine est une résine époxy avec des groupes hydroxyle libres, une résine de polyester non saturée ou un mélange d'une résine époxy et d'une résine de polyester.

10. Procédé selon l'une des revendications 8 et 9, caractérisé en ce que la température pendant le traitement se situe entre 175 et 200°C.

11. Procédé selon l'une des revendications 1 à 7, caractérisé en ce qu'avant l'introduction de la màsse dans le moule, on y met une ou plusieurs nappes de fibres de verre qui sont imprégnées d'une résine époxy ou de polyester ou bien d'un mélange de ces résines.

12. Procédé selon la revendication 11, caractérisé en ce qu'on applique deux nappes de fibres de verre entre lesquelles se trouve une décoration.

13. Procédé selon la revendication 12, caractérisé en ce que la décoration est composée de matières inorganiques ou organiques finement divisées.

14. Procédé selon la revendication 12, caractérisé en ce que la décoration se compose d'une résine pigmentée.

15. Objet moulé composé d'un corps sur la base d'une résine de polyester et éventuellement d'une couche de surface, dont le corps se compose d'un mélange durci de 80 à 95% en poids—calculé par rapport au mélange entier— de charges inorganiques avec une grosseur de grain située essentiellement entre 0 et 500 microns, de 1 à 5% en poids de fibres de verre—calculé par rapport au mélange entier— dont au moins les 3/4 ont une longueur de moins de 15 mm et s'y trouvent essentiellement sous forme de monofilaments arbitrairement divisés, et de 0,5 à 5% en poids d'oxyde de magnésium, calculé par rapport à la résine de polyester non saturée.

**Claims**

1. Process for producing mouldings by mixing unsaturated polyester resin, inorganic fillers and magnesium oxide, thickening the resultant mixture in the presence of glass fibres, and moulding portions of the thickened compound at elevated temperature, this process being characterized in that, by the side of the unsaturated polyester resin the mixture contains 80—95% wt.—referred to the total mixture—of inorganic fillers with a particle size lying mainly between 0 and 500 microns, 1—5% wt.— referred to the total mixture—of glass fibres at least three-quarters of which are shorter than 15 mm and are present mainly as randomly distributed monofilaments, and 0.5—5% wt.— referred to the unsaturated polyester resin—of magnesium oxide, which mixture is thickened until it is compact and practically free of air.

2. Process according to Claim 1, characterized in that it contains 1—2.5% wt. of glass fibres.

3. Process according to Claims 1—2, characterized in that the glass fibres mainly have a length of 6—12 mm.

4. Process according to Claims 1—3, characterized in that the average length of the glass fibres is about 9 mm.

5. Process according to Claims 1—4, characterized in that the filler mainly has a particle size of at most 200 microns.

6. Process according to Claims 1—5, characterized in that the mixture is thickened to a compact, practically air-free moulding compound in 1—48 hours.

7. Process according to Claims 1—6, characterized in that the thickened compound is compressed at a temperature of between 100 and 250°C and a pressure of between 30 (3) and 200 (20) kg/cm² (MPa).

8. Process according to Claims 1—7, characterized in that before the moulding has hardened completely it is treated with a pulverulent resin at a temperature of at least 150°C.

9. Process according to Claim 8, characterized in that the resin is an epoxy resin containing free hydroxyl groups, an unsaturated polyester resin, or a mixture of an epoxy and a polyester resin.

10. Process according to Claim 8 or 9, characterized in that during the treatment the temperature is 175—200°C.

11. Process according to Claims 1—7, characterized in that before the moulding compound is introduced, one or more glass fleeces impregnated with an epoxy or a polyester resin, or with a mixture of such resins, are placed in the mould.

12. Process according to Claim 11, characterized in that two glass fleeces are placed in the mould, with a decoration between them.

13. Process according to Claim 12, characterized in that the decoration consists of finely divided inorganic or organic substances.

14. Process according to Claim 12, characterized in that the decoration consists of a pigmented resin.

15. Moulding on the basis of polyester resin, with or without a surface layer, the body of this moulding consisting of a hardened mixture composed of 80—95% wt.—referred to the total mixture—of inorganic fillers with a particle size lying mainly between 0 and 500 microns, 1—5% wt.—referred to the total mixture—of glass fibres at least three-quarters of which are shorter than 15 mm and are present mainly as randomly distributed monofilaments, and 0.5—5% wt.—referred to the unsaturated polyester resin—of magnesium oxide.